# EUROPEAN PATENT APPLICATION

(11) **EP 4 521 277 A1**
(43) Date of publication of application: **12.03.2025**
(21) Application number: 23862413.4
(22) Date of filing: 06.09.2023
(51) Int. Cl.: G06F 21/53, G06F 9/445

(54) **SANDBOX RESTARTING METHOD AND APPARATUS**

(30) Priority: 09.09.2022 CN 202211103591
(71) Applicant: Huawei Technologies Co., Ltd., Shenzhen, Guangdong 518129 (CN)
(72) Inventor: QI, Changgui, Shenzhen, Guangdong 518129 (CN)
(74) Representative: Epping - Hermann - Fischer
(86) International application number: PCT/CN2023/117142
(87) International publication number: WO 2024/051719

(57) **Abstract**

Embodiments of this disclosure provide a sandbox restart method and apparatus. The method includes: in response to an N^{th} time of starting a sandbox, creating a sandbox running environment corresponding to the N^{th} time of starting the sandbox, where N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when a target object is run in the sandbox for an (N-1)^{th} time and that is for an initial sandbox configuration in a sandbox running environment created for the (N-1)^{th} time; and running a sandbox process in the sandbox running environment corresponding to the N^{th} time of starting the sandbox, where the sandbox process is used to execute the target object. In this way, the target sandbox configuration obtained after restart can inherit the modification content that is of the initial sandbox configuration and that is obtained before the restart, thereby avoiding a repeated configuration, improving effectiveness and reliability of the sandbox restart, and improving user experience.

## Description

This application claims priority to Chinese Patent Application No. 202211103591.6, filed with the China National Intellectual Property Administration on September 9, 2022 and entitled "SANDBOX RESTART METHOD AND APPARATUS", which is incorporated herein by reference in its entirety.

### TECHNICAL FIELD

This disclosure relates to the field of computer technologies, and in particular, to a sandbox restart method and apparatus.

### BACKGROUND

A sandbox is a mechanism providing isolated running for a target object, and provides resources such as virtual storage and networks for the target object in the sandbox. The sandbox can limit an execution environment of an untrusted target object. In this way, running of the untrusted target object only affects an interior of the sandbox and does not damage running of an entire system. After the sandbox exits due to a sandbox process crash or shutdown, or the like, when the sandbox is restarted, a new sandbox cannot inherit a sandbox configuration of the previous sandbox. As a result, the previous personalized sandbox configuration is lost.

### SUMMARY

To resolve the foregoing technical problem, embodiments of this disclosure provide a sandbox restart method and apparatus.

According to an aspect of embodiments of this disclosure, an embodiment of this disclosure provides a sandbox restart method. The method includes:
in response to an N^{th} time of starting a sandbox, creating a sandbox running environment corresponding to the N^{th} time of starting the sandbox, where
N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when a target object is run in the sandbox for an (N-1)^{th} time and that is for an initial sandbox configuration in a sandbox running environment created for the (N-1)^{th} time; and
running a sandbox process in the sandbox running environment corresponding to the N^{th} time of starting the sandbox, where the sandbox process is used to execute the target object.

In this embodiment, when the sandbox is started for the N^{th} time, the target configuration information in the corresponding sandbox running environment includes the configuration modification information of the (N-1)^{th} time, that is, when the sandbox is restarted for a current time, a sandbox configuration of a restarted sandbox may inherit a sandbox configuration of the sandbox that is started for a previous time, to avoid a disadvantage that the sandbox configuration of the sandbox that is started for the previous time is lost, avoid repeated adjustment of the sandbox configuration, and improve effectiveness and reliability of the sandbox restart.

In some embodiments, the creating a sandbox running environment corresponding to the N^{th} time of starting the sandbox includes:
obtaining a target local configuration for locally running the target object, where the target local configuration includes the configuration modification information;
mounting the target local configuration to the sandbox, to obtain the target sandbox configuration; and
creating, based on the target sandbox configuration, the sandbox running environment corresponding to the N^{th} time of starting the sandbox.

That is, in some possible implementation technical solutions, the local configuration may be modified, so that the sandbox configuration of the restarted sandbox does not need to be adjusted again in a personalized manner.

In some embodiments, the target local configuration is obtained by modifying, based on the configuration modification information, an initial local configuration for locally running the target object for an (N-1)^{th} time, and the initial sandbox configuration is obtained by mounting the initial local configuration to the sandbox that is started for the (N-1)^{th} time.

That is, in some possible implementation technical solutions, when a sandbox configuration is modified for a previous time, a local configuration may be modified based on configuration modification information, so that content of a modified local configuration is the same as content of a modified sandbox configuration, when the sandbox is started for a current time, the modified local configuration is mounted to the sandbox that is started for the current time, to obtain a sandbox configuration of the sandbox that is started for the current time, and the sandbox configuration of the restarted sandbox does not need to be adjusted again in a personalized manner. **In** some embodiments, the target local configuration is obtained by synchronizing the configuration modification information to the initial local configuration by using a user control file system.

For example, the user control file system is controlled, so that the configuration modification information may be synchronously written to the local configuration.

**In** some embodiments, the creating a sandbox running environment corresponding to the N^{th} time of starting the sandbox includes:
obtaining a local configuration for locally running the target object, and mounting the local configuration to the sandbox, to obtain an initial sandbox configuration;
generating the target sandbox configuration based on the initial sandbox configuration and locally prestored data, where the locally prestored data includes at least the configuration modification information; and
creating, based on the target sandbox configuration, the sandbox running environment corresponding to the N^{th} time of starting the sandbox.

That is, in some possible implementation technical solutions, when the sandbox is started for a previous time and the sandbox configuration is modified, corresponding configuration modification information may be locally stored, so that when the sandbox is started for a current time, sandbox configuration of the sandbox that is started for the current time is determined based on the locally stored configuration modification information, and the sandbox configuration of the restarted sandbox does not need to be adjusted again in a personalized manner.

In some embodiments, if the locally prestored data is the configuration modification information, the generating the target sandbox configuration based on the initial sandbox configuration and locally prestored data includes:
modifying, based on the configuration modification information, original data that is in the initial sandbox configuration and that corresponds to the configuration modification information, to obtain the target sandbox configuration.

In some embodiments, if the locally prestored data is data obtained by modifying the initial sandbox configuration based on the configuration modification information, the generating the target sandbox configuration based on the initial sandbox configuration and locally prestored data includes:
replacing the initial sandbox configuration with the locally prestored data, to obtain the target sandbox configuration.

That is, configuration modification information may be locally stored, or a sandbox configuration obtained after a sandbox configuration obtained when the sandbox is started for a previous time is modified based on configuration modification information may be locally stored. If the configuration modification information is locally stored, an initial sandbox configuration of the sandbox that is started for a current time may be modified based on the configuration modification information. If the modified sandbox configuration is locally stored, an initial sandbox configuration of the sandbox that is started for a current time may be replaced with the modified sandbox configuration, to avoid re-adjusting a sandbox configuration of the current-time sandbox. In some embodiments, the locally prestored data is data that includes at least the configuration modification information that is used to modify the initial sandbox configuration and that is locally stored when the target object is run in the sandbox for the (N-1)^{th} time.

The initial sandbox configuration is obtained by mounting the initial local configuration to the sandbox.

In some embodiments, the locally prestored data is the configuration modification information; or the locally prestored data is a configuration obtained after the initial sandbox configuration is modified based on the obtained configuration modification information.

In some embodiments, the locally prestored data is encrypted data.

That is, the configuration modification information or the modified sandbox configuration obtained based on the configuration modification information may be first encrypted, and then stored, to avoid leakage of the configuration modification information and the modified sandbox configuration.

According to another aspect of embodiments of this disclosure, an embodiment of this disclosure further provides a sandbox restart apparatus. The apparatus includes:
a creation unit, configured to: in response to an N^{th} time of starting a sandbox, create a sandbox running environment corresponding to the N^{th} time of starting the sandbox, where
N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when a target object is run in the sandbox for an (N-1)^{th} time and that is for an initial sandbox configuration in a sandbox running environment created for the (N-1)^{th} time; and
a running unit, configured to: run a sandbox process in the sandbox running environment corresponding to the N^{th} time of starting the sandbox, where the sandbox process is used to execute the target object.

In some embodiments, the creation unit includes:
a first obtaining subunit, configured to: obtain a target local configuration for locally running the target object, where the target local configuration includes the configuration modification information;
a first mounting subunit, configured to: mount the target local configuration to the sandbox, to obtain the target sandbox configuration; and
a first creation subunit, configured to: create, based on the target sandbox configuration, the sandbox running environment corresponding to the N^{th} time of starting the sandbox.

In some embodiments, the target local configuration is obtained by modifying, based on the configuration modification information, an initial local configuration for locally running the target object for an (N-1)^{th} time, and the initial sandbox configuration is obtained by mounting the initial local configuration to the sandbox that is started for the (N-1)^{th} time.

In some embodiments, the target local configuration is obtained by synchronizing the configuration modification information to the initial local configuration by using a user control file system.

In some embodiments, the creation unit includes:
a second obtaining subunit, configured to obtain a local configuration for locally running the target object;
a second mounting subunit, configured to: mount the local configuration to the sandbox, to obtain an initial sandbox configuration;
a generation subunit, configured to: generate the target sandbox configuration based on the initial sandbox configuration and locally prestored data, where the locally prestored data includes at least the configuration modification information; and
a second creation subunit, configured to: create, based on the target sandbox configuration, the sandbox running environment corresponding to the N^{th} time of starting the sandbox.

In some embodiments, if the locally prestored data is the configuration modification information, the generation subunit is configured to: modify, based on the configuration modification information, original data that is in the initial sandbox configuration and that corresponds to the configuration modification information, to obtain the target sandbox configuration.

In some embodiments, if the locally prestored data is data obtained by modifying the initial sandbox configuration based on the configuration modification information, the generation subunit is configured to: replace the initial sandbox configuration with the locally prestored data, to obtain the target sandbox configuration.

In some embodiments, the locally prestored data is data that includes at least the configuration modification information that is used to modify the initial sandbox configuration and that is locally stored when the target object is run in the sandbox for the (N-1)^{th} time.

The initial sandbox configuration is obtained by mounting the initial local configuration to the sandbox.

In some embodiments, the locally prestored data is the configuration modification information; or the locally prestored data is a configuration obtained after the initial sandbox configuration is modified based on the obtained configuration modification information.

In some embodiments, the locally prestored data is encrypted data.

According to another aspect of embodiments of this application, an embodiment of this application further provides a computer storage medium. The computer storage medium stores computer instructions, and when the computer instructions are run by a processor, the method according to any one of the foregoing embodiments is performed.

According to another aspect of embodiments of this application, an embodiment of this application further provides a computer program product. When the computer program product runs on a processor, the method according to any one of the foregoing embodiments is performed. According to another aspect of embodiments of this disclosure, an embodiment of this disclosure further provides an electronic device, including:
at least one processor; and
a memory that is communicatively connected to the at least one processor.

The memory stores computer instructions that can be executed by the at least one processor, and the computer instructions are executed by the at least one processor, so that the method according to any one of the foregoing embodiments is performed.

Embodiments of this disclosure provide the sandbox restart method and apparatus, including: in response to the N^{th} time of starting the sandbox, creating the sandbox running environment corresponding to the N^{th} time of starting the sandbox, where N is the positive integer greater than 1, the sandbox running environment corresponding to the N^{th} time of starting the sandbox includes the target sandbox configuration, the target sandbox configuration includes the configuration modification information, and the configuration modification information includes the modification content that is obtained when the target object is run in the sandbox for an (N-1)^{th} time and that is for the initial sandbox configuration in the sandbox running environment created for the (N-1)^{th} time; and running the sandbox process in the sandbox running environment corresponding to the N^{th} time of starting the sandbox, where the sandbox process is used to execute the target object. In this embodiment, the sandbox running environment of the target sandbox configuration including the configuration modification information is created, so that the sandbox process for executing the target object is run in the sandbox running environment. In this way, the target sandbox configuration obtained after restart can inherit the modification content that is of the initial sandbox configuration and that is obtained before the restart, thereby avoiding a repeated configuration, improving effectiveness and reliability of the sandbox restart, and improving user experience.

### BRIEF DESCRIPTION OF DRAWINGS

FIG. 1 is a diagram of a sandbox device to which a sandbox restart method according to an embodiment of this disclosure is applied;
FIG. 2 is a diagram of a principle of a sandbox restart method according to an embodiment of this disclosure;
FIG. 3 is a schematic flowchart of a sandbox restart method according to an embodiment of this disclosure;
FIG. 4 is a schematic flowchart of a sandbox restart method according to another embodiment of this disclosure;
FIG. 5 is a diagram of a principle of a sandbox restart method according to another embodiment of this disclosure;
FIG. 6 is a schematic flowchart of a sandbox restart method according to another embodiment of this disclosure;
FIG. 7 is a diagram of a principle of a sandbox restart method according to another embodiment of this disclosure;
FIG. 8 is a schematic flowchart of a sandbox restart method according to another embodiment of this disclosure;
FIG. 9 is a diagram of a principle of a sandbox restart method according to another embodiment of this disclosure;
FIG. 10 is a diagram of a sandbox restart apparatus according to an embodiment of this disclosure;
FIG. 11 is a diagram of a sandbox restart apparatus according to another embodiment of this disclosure; and
FIG. 12 is a diagram of an electronic device according to an embodiment of this disclosure.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this disclosure. On the contrary, the implementations are only examples of apparatuses and methods that are described in the appended claims in detail and that are consistent with some aspects of this disclosure.

A sandbox, also referred to as a sand table, is a mechanism providing isolated running for a target object (such as a program). The sandbox is a virtual system program that provides an isolated environment for a running target object. In this way, file operations such as creation, modification, deletion, and reading of the target object are performed in the isolated environment, and a target object in a non-sandbox environment (such as a local environment) is not affected.

That is, an essence of the sandbox is to run a target object by using a virtual running environment. The sandbox may be implemented by using a real operating system of an electronic device, or may be implemented by using a virtual machine.

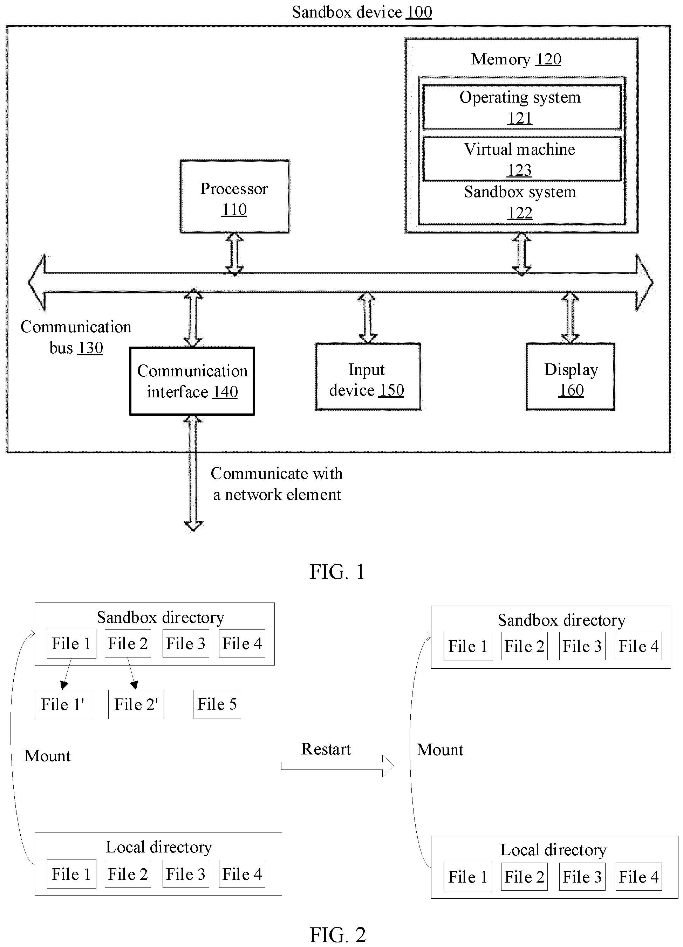

For example, refer to FIG. 1. FIG. 1 is a diagram of a sandbox device to which a sandbox restart method according to an embodiment of this disclosure is applied. As shown in FIG. 1, a sandbox device 100 may include a processor 110, a memory 120, a communication bus 130, and a communication interface 140. In some embodiments, the sandbox device 100 further includes an input device 150 and a display 160 shown in FIG. 1.

It should be understood that FIG. 1 is merely an example, and the sandbox device 100 may include fewer or more components than those in FIG. 1. This is not limited in this embodiment of this disclosure.

The communication bus 130 is configured to implement a connection between the foregoing components. A specific connection medium between the foregoing components is not limited in this embodiment of this disclosure. In addition, a connection manner between the components is merely an example for description, and is not limited thereto.

The communication interface 140 may be wired or wireless, and is configured to implement communication with another network element.

The processor 110 is configured to execute a program in the memory 120. The program may be a program of an operating system or various applications.

The memory 120 includes an operating system 121, and may further include an application.

A sandbox system 122 includes the operating system 121 and a virtual machine 123. The sandbox system 122 may run a program by using the virtual machine 123.

It should be understood that the operating system 121 shown in FIG. 1 may be replaced by a virtual machine controller. In other words, the sandbox system may be implemented by the virtual machine controller and the virtual machine. In addition, the virtual machine controller may be a program in the operating system, or may be another application that can be run in the operating system. This is not limited in this embodiment of this disclosure.

It should be understood that, in embodiments of this disclosure, the virtual machine is a computer system that is generated by using a virtualization technology and that has complete software and hardware system functions. The used virtualization technology is not limited in embodiments of this disclosure.

A process represents an instance of a running computer program, and includes program code and a running activity of the program code. Correspondingly, in this embodiment of this disclosure, the program may be fully run in the virtual machine and cannot sense a sandbox. A sandbox process represents an instance of a computer program running in the sandbox, and includes program code and a running activity of the program code.

However, after a sandbox for running a target object exits due to a sandbox process crash or shutdown, or the like, when the sandbox for running the target object is restarted, a restarted new sandbox cannot inherit a sandbox configuration in a sandbox running environment corresponding to the previous sandbox.

For example, a target object may be run in a non-sandbox state. For example, when the target object is locally run, a non-sandbox running environment for running the target object is locally created, for example, a local running environment, where the local running environment includes a local configuration for running the target object.

A target object may alternatively be run in a sandbox state. A sandbox running environment for running the target object is created in the sandbox, and the sandbox running environment includes a sandbox configuration for running the target object.

For example, when a sandbox for running a target object is started for a first time, a corresponding sandbox running environment is created (for ease of differentiation, the sandbox running environment is referred to as a first-time sandbox running environment), and the first sandbox running environment includes a sandbox configuration (for ease of differentiation, the sandbox configuration is referred to as a first-time sandbox configuration). If the sandbox that is started for the first time is closed, the sandbox for running the target object needs to be restarted. That is, the sandbox for running the target object is started for a second time. In this case, a corresponding sandbox running environment is also created (for ease of differentiation, the sandbox running environment is referred to as a second-time sandbox running environment). The second-time sandbox running environment includes a sandbox configuration (for ease of differentiation, the sandbox configuration is referred to as a second-time sandbox configuration). However, the second-time sandbox configuration cannot inherit content of the first-time sandbox configuration. The target object is not limited in this embodiment of this disclosure. For example, the target object may be an application, for example, an office application, or may be a communication application, or may be a video application, or the like. Details are not listed one by one herein again.

The office application may be a program for viewing an encrypted document. The communication application may be an instant messaging application.

The local configuration may be understood as configuration data that supports local running of the target object. For example, if the target object is the program for viewing the encrypted document, the local configuration may be configuration data that supports a program for viewing the encrypted document locally. For another example, if the target object is the communication application, the local configuration may be configuration data that supports local running of the communication application.

The sandbox configuration may be understood as configuration data that supports running of the target object in the sandbox. For example, if the target object is the program for viewing the encrypted document, the sandbox configuration may be configuration data that supports running, in the sandbox, of the program for viewing the encrypted document. For another example, if the target object is the communication application, the sandbox configuration may be configuration data that supports running of the communication application in the sandbox.

For ease of understanding of the sandbox restart method by a reader, the sandbox restart method is described with reference to FIG. 2 by using an example in which a target object is a program for viewing an encrypted document.

If the target object is the program for viewing the encrypted document, when the program for viewing the encrypted document is run in a local running environment, the local running environment includes a local configuration, and the local configuration may include a directory for running the program for viewing the encrypted document (for ease of differentiation, the directory is referred to as a local directory). For example, as shown in FIG. 2, the local directory includes a file (file) 1, a file 2, a file 3, and a file 4.

When the program for viewing the encrypted document needs to be started in a sandbox, that is, when the program needs to view the encrypted document in the sandbox, a sandbox management program that manages starting of the sandbox may configure a sandbox running environment. The sandbox management program may be the operating system shown in FIG. 1.

Correspondingly, the sandbox running environment includes a configuration (for ease of differentiation, the configuration is referred to as a sandbox configuration) for running, in the sandbox, the program for viewing the encrypted document, and the sandbox configuration may include a sandbox directory, a permission configuration, and the like.

In some embodiments, the sandbox directory may be obtained by mounting the local directory in the local to the sandbox. For example, the local directory may be mirrored (Mirroring) from the local to the sandbox based on an overlay filesystem (OverlayFS), for example, mirrored to the virtual machine shown in FIG. 1, to obtain a sandbox directory in the virtual machine. Mirroring is a file storage form, is a type of redundancy, and means that data on a storage object (for example, a magnetic disk) has a completely same copy on another storage object (for example, a magnetic disk).

That is, content in the sandbox directory is the same as content in the local directory. As shown in FIG. 2, when the sandbox running environment is created, the local directory including a file 1 to a file 4 may be mirrored to obtain the sandbox directory in the sandbox running environment, for example, a file 1, a file 2, a file 3, and a file 4 in the sandbox directory shown in FIG. 2.

After the sandbox running environment is created, a sandbox process may be run in the sandbox running environment, to execute, based on the sandbox process, the program for viewing the encrypted document, that is, to run, in the sandbox running environment, the program for viewing the encrypted document.

It should be noted that the sandbox process may read and/or write the sandbox configuration in the sandbox running environment. For example, a user may read and/or write the sandbox directory in the sandbox configuration based on the sandbox process.

The sandbox process may modify at least a part of data in the sandbox configuration, for example, modify a part of data in the sandbox configuration based on a modification instruction of the user. The modification may take effect in the sandbox running environment. That is, the modification takes effect for the sandbox configuration in the sandbox running environment. For example, the sandbox configuration in the sandbox running environment is a modified sandbox configuration. However, the modification does not take effect in a non-sandbox running environment. For example, the modification does not locally take effect.

For example, as shown in FIG. 2, the sandbox process modifies the file 1 and the file 2 in the sandbox configuration based on the modification instruction of the user, to obtain a file 1' and a file 2' shown in FIG. 2, and the sandbox program generates a file 5 shown in FIG. 2 based on an adding instruction of the user. However, the local directory in the local configuration is not affected, and is still the file 1, the file 2, the file 3, and the file 4.

If the sandbox needs to be restarted due to a sandbox crash or another reason, it can be learned from the foregoing embodiment that the modification for the sandbox running environment does not locally take effect, and the local configuration does not change. Therefore, as shown in FIG. 2, a sandbox configuration in a sandbox running environment in which the sandbox is restarted is still the file 1, the file 2, the file 3, and the file 4.

That is, in a sandbox running environment in which the sandbox is restarted, a sandbox configuration cannot inherit a sandbox configuration in a sandbox running environment in which the sandbox is started for a previous time. For example, in the foregoing example, the sandbox configuration in the sandbox running environment in which the sandbox is restarted is still the file 1, the file 2, the file 3, and the file 4, and cannot inherit the file 1', the file 2', and the file 5 in the sandbox configuration in the sandbox running environment in which the sandbox is started for the previous time.

To avoid a problem that a sandbox configuration in a sandbox running environment in which the sandbox is started for a current time cannot inherit a sandbox configuration in a sandbox running environment in which the sandbox is started for a previous time, the inventor of this disclosure obtains an inventive concept of this disclosure through creative efforts: obtaining configuration modification information that is of a sandbox configuration in the sandbox running environment and that exists when a sandbox process is run in the sandbox running environment for a previous time, to determine a sandbox running environment of a current-time sandbox process based on the configuration modification information.

By using specific embodiments, the following describes in detail technical solutions of this disclosure and how the foregoing technical problems are resolved by using the technical solutions of this disclosure. The following several specific embodiments may be combined with each other, and a same or similar concept or process may not be described repeatedly in some embodiments. The following describes embodiments of this disclosure with reference to the accompanying drawings.

According to an aspect, an embodiment of this disclosure provides a sandbox restart method.

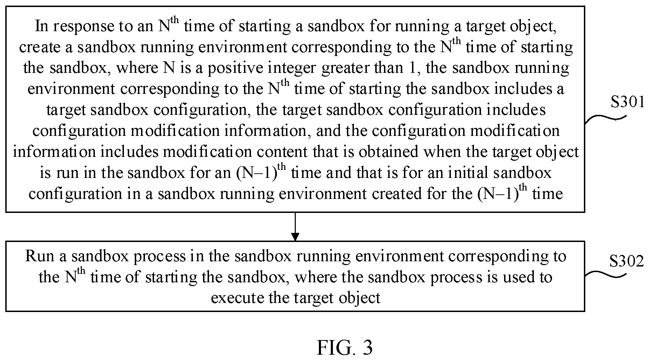

Refer to FIG. 3. FIG. 3 is a schematic flowchart of a sandbox restart method according to an embodiment of this disclosure. As shown in FIG. 3, the method includes the following steps. S301: In response to an N^{th} time of starting a sandbox for running a target object, create a sandbox running environment corresponding to the N^{th} time of starting the sandbox.

N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when the target object is run in the sandbox for an (N-1)^{th} time and that is for an initial sandbox configuration in a sandbox running environment created for the (N-1)^{th} time.

The sandbox restart method according to this embodiment is executed by a sandbox restart apparatus. The sandbox restart apparatus may be a computer, or may be a server (such as a local server or a cloud server), or may be a terminal device, or may be a processor, or may be a chip. This is not limited in this embodiment.

Specifically, the terminal device may be a mobile terminal such as a mobile phone (or referred to as a "cellular" phone) or a computer with a mobile terminal, for example, may be a portable, pocket-sized, handheld, computer-built-in, or vehicle-mounted mobile apparatus that exchanges languages and/or data with a radio access network. Alternatively, the terminal device may be a device such as a personal communication service (Personal Communication Service, PCS) phone, a cordless phone, a session initiation protocol (Session Initiation Protocol, SIP) phone, a wireless local loop (Wireless Local Loop, WLL) station, a personal digital assistant (Personal Digital Assistant, PDA), a tablet computer, a wireless modem (modem), a handheld device (handset), a laptop computer (laptop computer), or a machine type communication (Machine Type Communication, MTC) terminal. Alternatively, the terminal device may be referred to as a system, a subscriber unit (Subscriber Unit), a subscriber station (Subscriber Station), a mobile station (Mobile Station), a mobile (Mobile) console, a remote station (Remote Station), a remote terminal (Remote Terminal), an access terminal (Access Terminal), a user terminal (User Terminal), a user agent (User Agent), a user device (User Device or User Equipment), or the like. This is not limited herein.

It may be understood that, each time a sandbox for running a target object is started, a sandbox running environment corresponding to this time of starting the sandbox needs to be created, to run the corresponding target object in the sandbox running environment.

For example, when a sandbox for running a target object is started for a first time, a sandbox running environment corresponding to the first time of starting the sandbox is created, to run the corresponding target object in the sandbox running environment; and when the sandbox for running the target object is started for a second time, a sandbox running environment corresponding to the second time of starting the sandbox is created, to run the target object in the sandbox running environment. By analogy, details are not listed one by one herein again.

Correspondingly, this embodiment may be understood as follows: If the sandbox for running the target object needs to be started for the second time or a subsequent time (for example, a third time or a fourth time), a sandbox running environment corresponding to the second time or the subsequent time of starting the sandbox is created. Starting the sandbox for the first time may be understood as the first time of starting the sandbox, and starting the sandbox for the second time or the subsequent time may be understood as restarting the sandbox.

It can be learned from the foregoing analysis that, in some embodiments, when a sandbox is restarted, a created sandbox running environment is the same as a sandbox running environment in which the sandbox is started for a first time. If a sandbox configuration in a corresponding sandbox running environment is modified in a sandbox running process before the sandbox is restarted, a sandbox configuration in the sandbox running environment created when the sandbox is restarted cannot inherit modification content, but is the same as a sandbox configuration in the sandbox configuration environment in which the sandbox is started for the first time.

However, in this embodiment, the foregoing problem can be avoided. The sandbox configuration that is obtained when the sandbox is started for the N^{th} time and that is in the sandbox running environment corresponding to the N^{th} time of starting the sandbox may inherit the sandbox configuration that is obtained when the sandbox is started for the (N-1)^{th} time and that is in the sandbox running environment corresponding to the (N-1)^{th} time of starting the sandbox. That is, if the sandbox is started for the (N-1)^{th} time (which may be a first time of starting, or may be a non-first time of starting), and the sandbox configuration in the sandbox running environment corresponding to the (N-1)^{th} time of starting the sandbox is modified, the sandbox configuration in the sandbox running environment created when the sandbox is started for the N^{th} time may inherit modification content of the sandbox configuration in the sandbox running environment corresponding to the (N-1)^{th} time of starting the sandbox.

For example, an example in which N is 2 (that is, the sandbox is started for a second time) is used for description as follows.

When the sandbox is started for a first time, a sandbox running environment corresponding to the first time of starting the sandbox is created. For ease of differentiation, the sandbox running environment may be referred to as a first-time sandbox running environment, and the first-time sandbox running environment includes a sandbox configuration. Similarly, for ease of differentiation, the sandbox configuration is referred to as an initial sandbox configuration.

If the initial sandbox configuration is modified when the target object is run in the first-time sandbox running environment, for example, content in the initial sandbox configuration is modified, newly added, or deleted, modification content of the initial sandbox configuration may be referred to as configuration modification information.

If the sandbox that is started for the first time is closed due to an objective reason (for example, the sandbox that is started for the first time crashes, or a computer running the sandbox is faulty) and/or a subjective reason (for example, a user operation), the sandbox needs to be restarted. That is, the sandbox is started for the second time. In this case, when the sandbox is started for the second time, a sandbox running environment corresponding to the second time of starting the sandbox needs to be created. Similarly, for ease of differentiation, the sandbox running environment is referred to as a second-time sandbox running environment, and the second-time sandbox running environment includes a sandbox configuration. Similarly, for ease of differentiation, the sandbox configuration is referred to as a target sandbox configuration.

It should be noted that, in this embodiment, the target sandbox configuration includes configuration modification information. Because the target sandbox configuration includes the configuration modification information, the second-time sandbox running environment may inherit the first-time sandbox running environment, to improve validity and reliability of sandbox running environment creation, avoid a user from modifying the sandbox running environment again, and improve user experience.

For example, with reference to the foregoing analysis, it can be learned that the target object may be a program for viewing an encrypted document. The initial sandbox configuration includes a font size setting of a font (that is, a size setting of the font), and a font size is "small four".

For ease of viewing, the user changed a font size setting of a font of the encrypted document from "small four" to "small five" when viewing the encrypted document in the sandbox. Correspondingly, if the embodiment shown in FIG. 2 is used, after the sandbox is restarted, a font size setting in a sandbox configuration obtained after restart is still "small four".

If the solution in this embodiment is used, the target sandbox configuration also includes a font size setting of a font, and a font size is "small five" instead of the original "small four".

In contrast, in this embodiment, the target sandbox configuration inherits configuration modification information of the initial sandbox configuration, that is, the font size is "small five", and the user does not need to modify the font size setting again. This improves viewing experience of the user.

For another example, with reference to the foregoing analysis, it can be learned that the target object may be a communication application, for example, chat software. If the initial sandbox configuration includes a sorting setting of chat objects, and the sorting setting is sorting based on initial letters of names of the chat objects.

To facilitate communication, the user modifies the sorting setting in the sandbox and sets a chat object to the top.

Correspondingly, if the embodiment shown in FIG. 2 is used, after the sandbox is restarted, a sorting setting of the chat objects in a sandbox configuration obtained after restart is still sorting based on the initial letters of the names of the chat objects.

However, if the solution in this embodiment is used, the target sandbox configuration also includes a sorting setting of the chat objects, and the sorting setting of the chat objects is a sorting setting obtained after the chat object is set to the top, instead of original sorting based on the initial letters of the names of the chat objects.

In contrast, in this embodiment, the target sandbox configuration inherits configuration modification information of the initial sandbox configuration, that is, the sorting setting of the chat objects is the sorting setting obtained after the chat object is set to the top. The user does not need to sort the chat objects again based on the initial letters of the names of the chat objects, thereby improving viewing experience of the user.

S302: Run a sandbox process in the sandbox running environment corresponding to the N^{h} time of starting the sandbox, where the sandbox process is used to execute the target object.

Correspondingly, after the sandbox running environment corresponding to the N^{th} time of starting the sandbox is created, the sandbox process may be created in the sandbox running environment corresponding to the N^{th} time of starting the sandbox, and the sandbox process is run in the sandbox running environment corresponding to the N^{th} time of starting the sandbox, to run the target object in the sandbox that is started for the N^{th} time.

For example, with reference to the foregoing analysis, after the second-time sandbox running environment is created, a sandbox process is started in the second-time sandbox running environment, to run, in the sandbox that is started for the second time, the program for viewing the encrypted document.

With reference to the foregoing analysis, it can be learned that this disclosure provides the sandbox restart method. The method includes: in response to the N^{th} time of starting the sandbox, creating the sandbox running environment corresponding to the N^{th} time of starting the sandbox, where N is the positive integer greater than 1, the sandbox running environment corresponding to the N^{th} time of starting the sandbox includes the target sandbox configuration, the target sandbox configuration includes the configuration modification information, and the configuration modification information includes the modification content that is obtained when the target object is run in the sandbox for an (N-1)^{th} time and that is for the initial sandbox configuration in the sandbox running environment created for the (N-1)^{th} time; and running the sandbox process in the sandbox running environment corresponding to the N^{th} time of starting the sandbox, where the sandbox process is used to execute the target object. In this embodiment, the sandbox running environment of the target sandbox configuration including the configuration modification information is created, so that the sandbox process for executing the target object is run in the sandbox running environment. In this way, the target sandbox configuration obtained after restart can inherit the modification content that is of the initial sandbox configuration and that is obtained before the restart, thereby avoiding a repeated configuration, improving effectiveness and reliability of the sandbox restart, and improving user experience.

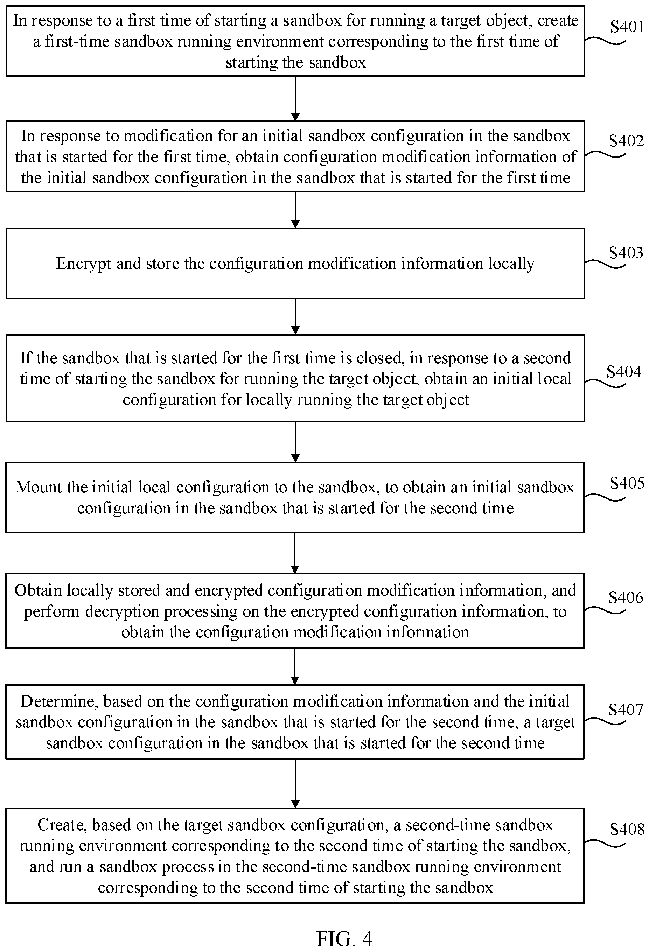

To enable a reader to better understand an implementation principle of embodiments of this disclosure, embodiments of this disclosure are described in more detail with reference to FIG. 4.

FIG. 4 is a schematic flowchart of a sandbox restart method according to another embodiment of this disclosure. As shown in FIG. 4, the method includes the following steps.

S401: In response to a first time of starting a sandbox for running a target object, create a first-time sandbox running environment corresponding to the first time of starting the sandbox.

The first-time sandbox running environment includes an initial sandbox configuration, the initial sandbox configuration is obtained by mounting an initial local configuration to the sandbox, and the initial local configuration is used to support local running of the target object.

That is, the initial local configuration for locally running the target object is locally stored. To run the target object in the sandbox, the initial local configuration may be mounted from the local to the sandbox, to obtain the initial sandbox configuration in the sandbox, and the first-time sandbox running environment may be created based on the initial sandbox configuration, to run the target object in the first-time sandbox running environment.

It should be understood that, to avoid cumbersome descriptions, a technical feature of this embodiment that is the same as a technical feature of the foregoing embodiment is not limited in this embodiment.

For example, the target object is not limited in this embodiment, the first-time sandbox running environment is a sandbox running environment in which the target object is run in the sandbox for the first time, and the like. Details are not listed one by one herein again.

In some embodiments, creating the first-time sandbox running environment corresponding to the first time of starting the sandbox may include the following steps.

First step: Obtain the initial local configuration for locally running the target object.

The initial local configuration may be understood as: if the target object is currently run locally, a configuration locally stored to ensure that the target object is locally run.

Second step: Mount the initial local configuration to the sandbox, to obtain the initial sandbox configuration in the sandbox that is started for the first time.

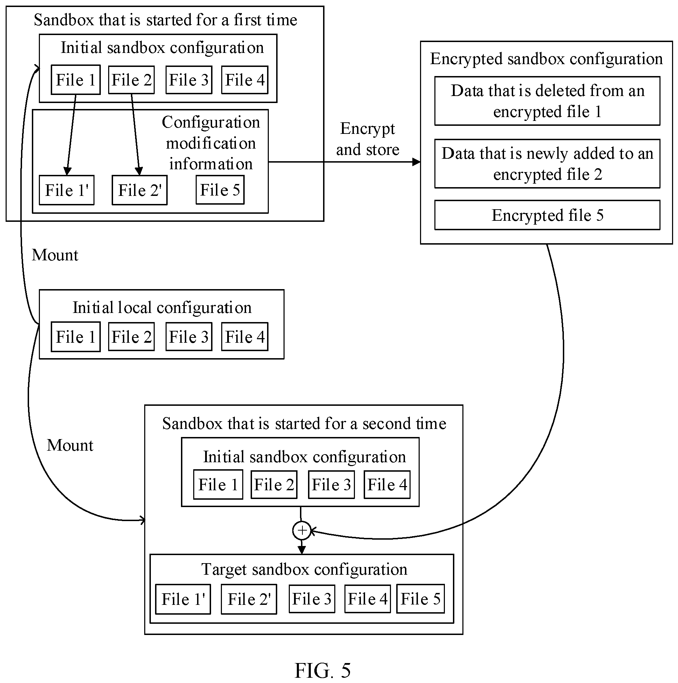

For example, as shown in FIG. 5, the initial local configuration includes a file 1, a file 2, a file 3, and a file 4. A sandbox restart apparatus may mount the file 1, the file 2, the file 3, and the file 4 to the sandbox that is started for the first time, to obtain the initial sandbox configuration in the sandbox that is started for the first time, that is, obtain a file 1, a file 2, a file 3, and a file 4 in the initial sandbox configuration in FIG. 5.

Third step: Create, based on the initial sandbox configuration in the sandbox that is started for the first time, the first-time sandbox running environment corresponding to the first time of starting the sandbox.

As shown in FIG. 5, the first-time sandbox running environment may include the initial sandbox configuration in the sandbox that is started for the first time, and the initial sandbox configuration in the sandbox that is started for the first time includes the file 1, the file 2, the file 3, and the file 4. However, it should be understood that the first sandbox running environment may further include other content, for example, a permission configuration.

S402: In response to modification for the initial sandbox configuration in the sandbox that is started for the first time, obtain configuration modification information of the initial sandbox configuration in the sandbox that is started for the first time.

For example, as shown in FIG. 5, if a user modifies the initial sandbox configuration in the sandbox that is started for the first time, deletes a part of data from the file 1 to obtain a file 1', newly adds data to the file 2 to obtain a file 2', and newly adds a file 5, the configuration modification information obtained by the sandbox restart apparatus includes: the part of data deleted from the file 1, the data newly added to the file 2, and the file 5.

S403: Encrypt and store the configuration modification information locally.

This embodiment does not limit an encryption manner of the configuration modification information. For example, the configuration modification information may be encrypted by using a symmetric key encryption algorithm, or the configuration modification information may be encrypted by using an asymmetric key encryption algorithm.

With reference to the foregoing example and FIG. 5, the configuration modification information is locally encrypted and stored, to obtain an encrypted sandbox configuration. The encrypted sandbox configuration includes data that is deleted from an encrypted file 1, data that is newly added to an encrypted file 2, and an encrypted file 5.

It should be noted that, data of the previous-time sandbox is lost when the sandbox is restarted. Therefore, in this embodiment, the configuration modification information is locally stored, to avoid a loss of the configuration modification information, and the configuration modification information is locally stored in an encryption manner, so that leakage of the configuration modification information can be avoided, and security and reliability of the configuration modification information can be improved.

S404: If the sandbox that is started for the first time is closed, in response to a second time of starting the sandbox for running the target object, obtain the initial local configuration for locally running the target object.

S405: Mount the initial local configuration to the sandbox, to obtain an initial sandbox configuration in the sandbox that is started for the second time.

Because both the initial sandbox configuration in the sandbox that is started for the first time and the initial sandbox configuration in the sandbox that is started for the second time are obtained by mounting the initial local configuration, the initial sandbox configuration in the sandbox that is started for the first time is the same as the initial sandbox configuration in the sandbox that is started for the second time.

For example, as shown in FIG. 5, the initial sandbox configuration in the sandbox that is started for the second time includes a file 1, a file 2, a file 3, and a file 4.

S406: Obtain the locally stored and encrypted configuration modification information, and perform decryption processing on the encrypted configuration information, to obtain the configuration modification information.

It should be understood that a decryption manner is determined based on the encryption manner, so that the configuration modification information is restored from the encrypted configuration modification information through decryption.

S407: Determine, based on the configuration modification information and the initial sandbox configuration in the sandbox that is started for the second time, a target sandbox configuration in the sandbox that is started for the second time.

For example, as shown in FIG. 5, the configuration modification information includes the data deleted from the file 1 in the initial sandbox configuration in the sandbox that is started for the first time. **In** this case, same data in the file 1 in the initial sandbox configuration in the sandbox that is started for the second time is deleted, that is, data that is deleted in the configuration modification information is deleted from the file 1 in the initial sandbox configuration in the sandbox that is started for the second time, to obtain a file 1' that is shown in FIG. 5 and that is in the target sandbox configuration in the sandbox that is started for the second time.

Similarly, the configuration modification information includes the data newly added to the file 2 in the initial sandbox configuration in the sandbox that is started for the first time. **In** this case, same data is newly added to the file 2 in the initial sandbox configuration in the sandbox that is started for the second time, that is, data that is newly added in the configuration modification information is newly added to the file 2 in the initial sandbox configuration in the sandbox that is started for the second time, to obtain a file 2' that is shown in FIG. 5 and that is in the target sandbox configuration in the sandbox that is started for the second time.

Similarly, the configuration modification information includes the file 5 newly added to the initial sandbox configuration in the sandbox that is started for the first time. **In** this case, same data is newly added to the initial sandbox configuration in the sandbox that is started for the second time, that is, a file 5 is newly added to the initial sandbox configuration in the sandbox that is started for the second time, to obtain the file 5 that is shown in FIG. 5 and that is in the target sandbox configuration in the sandbox that is started for the second time.

As shown in FIG. 5, the target sandbox configuration in the sandbox that is started for the second time is determined by using "the initial sandbox configuration+the configuration modification information", so that content of the target sandbox configuration in the sandbox that is started for the second time is the same as content obtained after modification for the initial sandbox configuration in the sandbox that is started for the first time, that is, the target sandbox configuration in the sandbox that is started for the second time may inherit modification content in the sandbox that is started for the first time. This avoids the user from performing modification again, improves reliability and effectiveness of the sandbox restart, and improves user experience. S408: Create, based on the target sandbox configuration, a second-time sandbox running environment corresponding to the second time of starting the sandbox, and run a sandbox process in the second-time sandbox running environment corresponding to the second time of starting the sandbox, where the sandbox process is used to execute the target object.

For example, as shown in FIG. 5, the second sandbox running environment includes the target sandbox configuration, and the target sandbox configuration is a sandbox configuration obtained after the initial sandbox configuration is modified. The target object is run in the second sandbox running environment, and the modified sandbox configuration is reserved. The user does not need to perform adjustment again, thereby improving user experience.

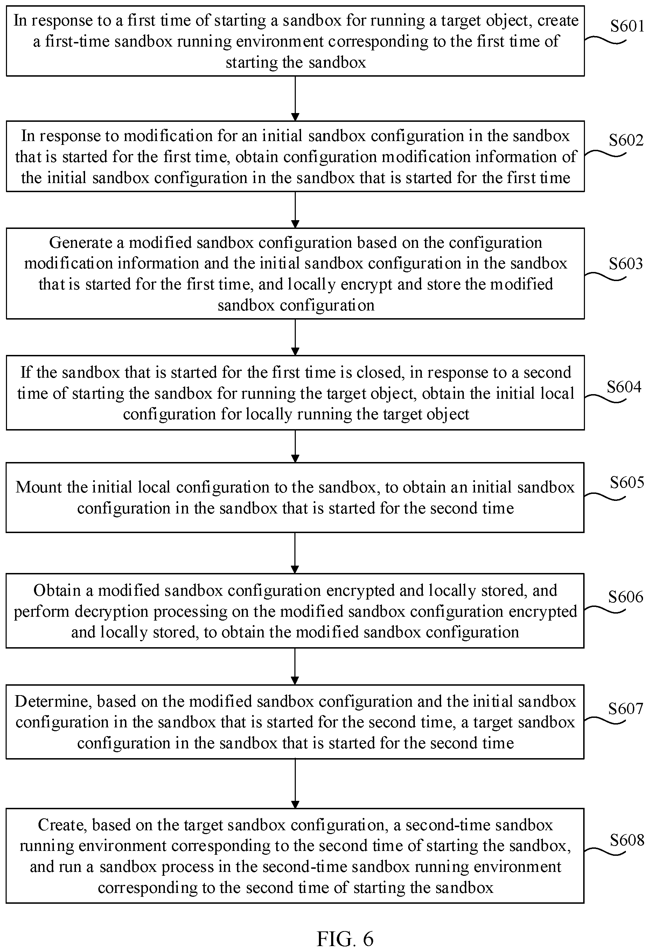

Based on the foregoing analysis, it can be learned that in some embodiments, the sandbox may be restarted in a manner of storing the configuration modification information. In some other embodiments, the sandbox may be restarted in a manner of storing the modified sandbox configuration. Details are described in detail with reference to FIG. 6. FIG. 6 is a schematic flowchart of a sandbox restart method according to another embodiment of this disclosure. As shown in FIG. 6, the method includes the following steps.

S601: In response to a first time of starting a sandbox for running a target object, create a first-time sandbox running environment corresponding to the first time of starting the sandbox.

The first-time sandbox running environment includes an initial sandbox configuration, the initial sandbox configuration is obtained by mounting an initial local configuration to the sandbox, and the initial local configuration is used to locally run the target object.

Similarly, to avoid cumbersome descriptions, a technical feature of this embodiment that is the same as a technical feature of the foregoing embodiment is not limited in this embodiment.

For example, the target object is not limited in this embodiment, the first-time sandbox running environment is a sandbox running environment in which the target object is run in the sandbox for the first time, and the like. Details are not listed one by one herein again.

In some embodiments, creating the first-time sandbox running environment corresponding to the first time of starting the sandbox may include the following steps.

First step: Obtain the initial local configuration for locally running the target object.

The initial local configuration may be understood as: if the target object is currently run locally, a configuration locally stored to ensure that the target object is locally run.

Second step: Mount the initial local configuration to the sandbox, to obtain the initial sandbox configuration in the sandbox that is started for the first time.

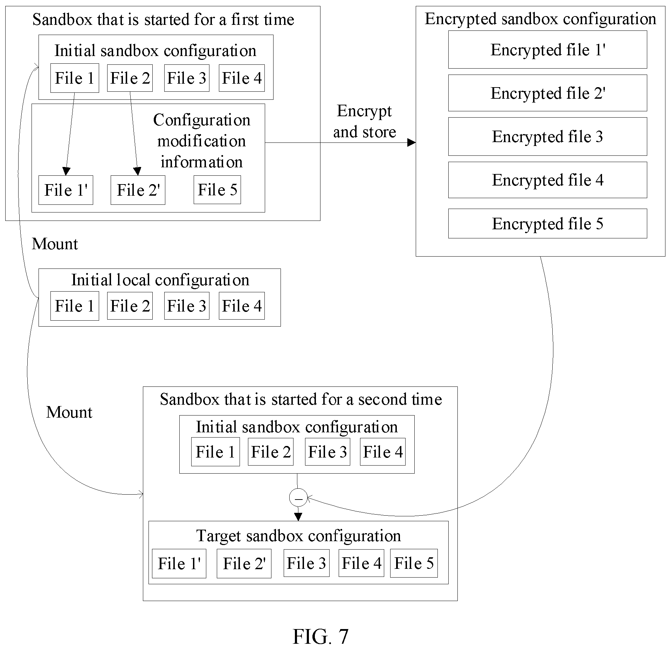

For example, as shown in FIG. 7, the initial local configuration includes a file 1, a file 2, a file 3, and a file 4. A sandbox restart apparatus may mount the file 1, the file 2, the file 3, and the file 4 to the sandbox that is started for the first time, to obtain the initial sandbox configuration in the sandbox that is started for the first time, that is, obtain a file 1, a file 2, a file 3, and a file 4 in the initial sandbox configuration in FIG. 7.

Third step: Create, based on the initial sandbox configuration in the sandbox that is started for the first time, the first-time sandbox running environment corresponding to the first time of starting the sandbox.

As shown in FIG. 7, the first-time sandbox running environment may include the initial sandbox configuration in the sandbox that is started for the first time, and the initial sandbox configuration in the sandbox that is started for the first time includes the file 1, the file 2, the file 3, and the file 4. However, it should be understood that the first sandbox running environment may further include other content, for example, a permission configuration.

S602: In response to modification for the initial sandbox configuration in the sandbox that is started for the first time, obtain configuration modification information of the initial sandbox configuration in the sandbox that is started for the first time.

For example, as shown in FIG. 7, if a user modifies the initial sandbox configuration in the sandbox that is started for the first time, deletes a part of data from the file 1 to obtain a file 1', newly adds data to the file 2 to obtain a file 2', and newly adds a file 5, the configuration modification information obtained by the sandbox restart apparatus includes: the part of data deleted from the file 1, the data newly added to the file 2, and the file 5.

S603: Generate a modified sandbox configuration based on the configuration modification information and the initial sandbox configuration in the sandbox that is started for the first time, and locally encrypt and store the modified sandbox configuration.

Similarly, this embodiment does not limit an encryption manner of the configuration modification information. For example, the configuration modification information may be encrypted by using a symmetric key encryption algorithm, or the configuration modification information may be encrypted by using an asymmetric key encryption algorithm.

With reference to the foregoing example, the modified sandbox configuration includes the file 1', the file 2', the file 3, the file 4, and the file 5. Encryption processing is performed on the modified sandbox configuration, and an encrypted sandbox configuration is obtained. Correspondingly, as shown in FIG. 7, the encrypted sandbox configuration includes an encrypted file 1', an encrypted file 2', an encrypted file 3, an encrypted file 4, and an encrypted file 5.

It should be noted that, data of the previous-time sandbox is lost when the sandbox is restarted. Therefore, in this embodiment, the modified sandbox configuration is locally stored, to avoid a loss of the modified sandbox configuration, and the modified sandbox configuration is locally stored in an encryption manner, so that leakage of the modified sandbox configuration can be avoided, and security and reliability of the modified sandbox configuration can be improved.

S604: If the sandbox that is started for the first time is closed, in response to a second time of starting the sandbox for running the target object, obtain the initial local configuration for locally running the target object.

S605: Mount the initial local configuration to the sandbox, to obtain an initial sandbox configuration in the sandbox that is started for the second time.

Because both the initial sandbox configuration in the sandbox that is started for the first time and the initial sandbox configuration in the sandbox that is started for the second time are obtained by mounting the initial local configuration, the initial sandbox configuration in the sandbox that is started for the first time is the same as the initial sandbox configuration in the sandbox that is started for the second time.

For example, as shown in FIG. 7, the initial sandbox configuration in the sandbox that is started for the second time includes a file 1, a file 2, a file 3, and a file 4.

S606: Obtain the modified sandbox configuration encrypted and locally stored, and perform decryption processing on the modified sandbox configuration encrypted and locally stored, to obtain the modified sandbox configuration.

It should be understood that a decryption manner is determined based on the encryption manner, so that the modified sandbox configuration is restored from the encrypted modified sandbox configuration through decryption.

S607: Determine, based on the modified sandbox configuration and the initial sandbox configuration in the sandbox that is started for the second time, a target sandbox configuration in the sandbox that is started for the second time.

In some embodiments, the target sandbox configuration may be obtained in an overwrite manner. For example, the modified sandbox configuration may overwrite the initial sandbox configuration in the sandbox that is started for the second time, to obtain the target sandbox configuration.

For example, as shown in FIG. 7, the modified sandbox configuration: the file 1', the file 2', the file 3, the file 4, and the file 5 overwrites the initial sandbox configuration in the sandbox that is started for the second time: the file 1, the file 2, the file 3, and the file 4, to obtain the target sandbox configuration: a file 1', a file 2', a file 3, a file 4, and a file 5.

In some other embodiments, the target sandbox configuration may be obtained in a replacement manner. For example, the initial sandbox configuration in the sandbox that is started for the second time may be replaced with the modified sandbox configuration, to obtain the target sandbox configuration.

In some other embodiments, the target sandbox configuration may be obtained in a modification manner. For example, the initial sandbox configuration in the sandbox that is started for the second time may be modified based on the modified sandbox configuration, to obtain the target sandbox configuration.

For example, it may be first determined whether the modified sandbox configuration and the initial sandbox configuration in the sandbox that is started for the second time include a same configuration, and if yes, the configuration is retained; or if no, the initial sandbox configuration in the sandbox that is started for the second time is modified based on the modified sandbox configuration.

For example, with reference to the foregoing example, the modified sandbox configuration includes: the file 1', the file 2', the file 3, the file 4, and the file 5, and the initial sandbox configuration in the sandbox that is started for the second time includes: the file 1, the file 2, the file 3, and the file 4, so that it may be determined that the modified sandbox configuration and the initial sandbox configuration in the sandbox that is started for the second time both include the file 3 and the file 4, and the file 3 and the file 4 may be retained, to determine the file 3 and the file 4 as data in the target sandbox configuration.

The file 1' in the modified sandbox configuration is different from the file 1 in initial sandbox configuration in the sandbox that is started for the second time. The file 1' is a file obtained after a part of data in the file 1 is deleted. In this case, the file 1 may be modified based on the file 1', that is, excess data of the file 1 relative to the file 1' is deleted, to modify the file 1 to the file 1'.

The file 2' in the modified sandbox configuration is different from the file 2 in the initial sandbox configuration in the sandbox that is started for the second time. The file 2' is a file obtained after data is newly added to the file 2. In this case, the file 2 may be modified based on the file 2', that is, excess data of the file 2' relative to the file 2 is newly added to the file 2, to modify the file 2 to the file 2'.

The modified sandbox configuration includes the newly added file 5', so that the file 5' may be newly added to the target sandbox configuration in the sandbox that is started for the second time. Similarly, as shown in FIG. 7, content of the target sandbox configuration in the sandbox that is started for the second time is the same as content obtained after modification for the initial sandbox configuration in the sandbox that is started for the first time, that is, the target sandbox configuration in the sandbox that is started for the second time may inherit modification content in the sandbox that is started for the first time. This avoids the user from performing modification again, improves reliability and effectiveness of the sandbox restart, and improves user experience. S608: Create, based on the target sandbox configuration, a second-time sandbox running environment corresponding to the second time of starting the sandbox, and run a sandbox process in the second-time sandbox running environment corresponding to the second time of starting the sandbox, where the sandbox process is used to execute the target object.

For example, as shown in FIG. 7, the target sandbox configuration in the sandbox that is started for the second time is determined by using "the initial sandbox configuration+the modified sandbox configuration". The second sandbox running environment includes the target sandbox configuration, and the target sandbox configuration is a sandbox configuration obtained after the initial sandbox configuration is modified. The target object is run in the second sandbox running environment, and the modified sandbox configuration is reserved. The user does not need to perform adjustment again, thereby improving user experience.

It can be learned from the foregoing analysis that, embodiments shown in FIG. 4 and FIG. 5 may be understood as determining the target sandbox configuration in a "differential backup" manner, that is, encrypting and storing only the configuration modification information, to determine the target sandbox configuration based on the encrypted and stored configuration modification information.

Embodiments shown in FIG. 6 and FIG. 7 may be understood as determining the target sandbox configuration in a "full backup" manner, that is, encrypting and storing the modified sandbox configuration, to determine the target sandbox configuration based on the encrypted and stored modified sandbox configuration.

That is, when starting the sandbox for an N^{th} time, the sandbox restart apparatus may obtain a local configuration for locally running the target object, mount the local configuration to the sandbox, to obtain an initial sandbox configuration, generate a target sandbox configuration based on the initial sandbox configuration and locally prestored data, where the locally prestored data includes at least configuration modification information, and create, based on the target sandbox configuration, a sandbox running environment corresponding to the N^{th} time of starting the sandbox.

The local configuration may be the configuration modification information in the foregoing embodiment, or may be the modified sandbox configuration.

That is, the locally prestored data is data that includes at least the configuration modification information that is used to modify an initial sandbox configuration and that is locally stored when the target object is run in the sandbox for an (N-1)^{th} time. The initial sandbox configuration is obtained by mounting an initial local configuration to the sandbox.

If the locally prestored data is the configuration modification information, the sandbox restart apparatus may modify, based on the configuration modification information, original data that is in the initial sandbox configuration and that corresponds to the configuration modification information, to obtain the target sandbox configuration.

If the locally prestored data is data obtained by modifying the initial sandbox configuration based on the configuration modification information, that is, the modified sandbox configuration, the sandbox restart apparatus may replace the initial sandbox configuration with the locally prestored data, to obtain the target sandbox configuration.

It should be noted that the target sandbox configuration is determined in a different backup manner (differential backup or full backup), so that diversity and flexibility of determining the target sandbox configuration can be implemented.

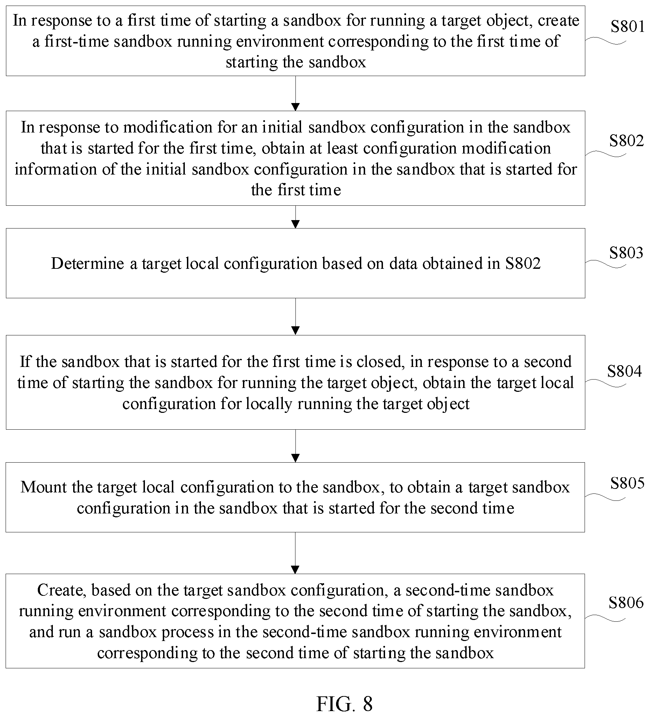

It can be learned from the foregoing analysis that, in some embodiments, the target sandbox configuration may be determined in a backup manner, to create a sandbox running environment including the target sandbox configuration, to implement sandbox restart. In some other embodiments, the sandbox may be restarted in a manner of modifying the initial local configuration. Details are described in detail with reference to FIG. 8. FIG. 8 is a schematic flowchart of a sandbox restart method according to another embodiment of this disclosure. As shown in FIG. 8, the method includes the following steps.

S801: In response to a first time of starting a sandbox for running a target object, create a first-time sandbox running environment corresponding to the first time of starting the sandbox.

The first-time sandbox running environment includes an initial sandbox configuration, the initial sandbox configuration is obtained by mounting an initial local configuration to the sandbox, and the initial local configuration is used to locally run the target object.

Similarly, to avoid cumbersome descriptions, a technical feature of this embodiment that is the same as a technical feature of the foregoing embodiment is not limited in this embodiment.

For example, the target object is not limited in this embodiment, the first-time sandbox running environment is a sandbox running environment in which the target object is run in the sandbox for the first time, and the like. Details are not listed one by one herein again.

In some embodiments, creating the first-time sandbox running environment corresponding to the first time of starting the sandbox may include the following steps.

First step: Obtain the initial local configuration for locally running the target object.

The initial local configuration may be understood as: if the target object is currently run locally, a configuration locally stored to ensure that the target object is locally run.

Second step: Mount the initial local configuration to the sandbox, to obtain the initial sandbox configuration in the sandbox that is started for the first time.

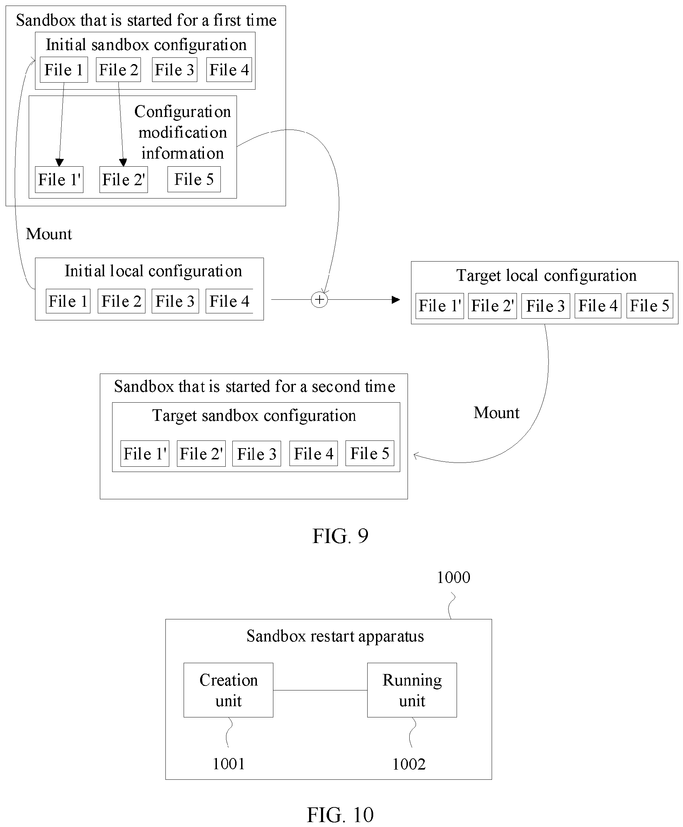

For example, as shown in FIG. 9, the initial local configuration includes a file 1, a file 2, a file 3, and a file 4. A sandbox restart apparatus may mount the file 1, the file 2, the file 3, and the file 4 to the sandbox that is started for the first time, to obtain the initial sandbox configuration in the sandbox that is started for the first time, that is, obtain a file 1, a file 2, a file 3, and a file 4 in the initial sandbox configuration in FIG. 9.

Third step: Create, based on the initial sandbox configuration in the sandbox that is started for the first time, the first-time sandbox running environment corresponding to the first time of starting the sandbox.

As shown in FIG. 9, the first-time sandbox running environment may include the initial sandbox configuration in the sandbox that is started for the first time, and the initial sandbox configuration in the sandbox that is started for the first time includes the file 1, the file 2, the file 3, and the file 4. However, it should be understood that the first sandbox running environment may further include other content, for example, a permission configuration.

S802: In response to modification for the initial sandbox configuration in the sandbox that is started for the first time, obtain at least configuration modification information of the initial sandbox configuration in the sandbox that is started for the first time.

In some embodiments, in response to modification for the initial sandbox configuration in the sandbox that is started for the first time, the configuration modification information is obtained.

For example, if a user modifies the initial sandbox configuration in the sandbox that is started for the first time, deletes a part of data from the file 1 to obtain a file 1', newly adds data to the file 2 to obtain a file 2', and newly adds a file 5, the obtained configuration modification information includes: the part of data deleted from the file 1, the data newly added to the file 2, and the file 5. In some other embodiments, in response to modification for the initial sandbox configuration in the sandbox that is started for the first time, data including the configuration modification information may be obtained.

For example, the obtained data including the configuration modification information is a modified sandbox configuration, that is, a sandbox configuration obtained by modifying the initial sandbox configuration in the sandbox that is started for the first time.

For example, if a user modifies the initial sandbox configuration in the sandbox that is started for the first time, deletes a part of data from the file 1 to obtain a file 1', newly adds data to the file 2 to obtain a file 2', and newly adds a file 5, the obtained modified sandbox configuration includes: the file 1', the file 2', the file 3, the file 4, and the file 5.

S803: Determine a target local configuration based on data obtained in S802.

With reference to the foregoing analysis, it can be learned that, in a possible implementation solution, the data obtained in S802 may be the configuration modification information. In this case, this step may be understood as: determining the target local configuration based on the configuration modification information.

For example, the target local configuration may be determined based on the configuration modification information and the initial local configuration.

For example, the configuration modification information includes: the part of data deleted from the file 1, the data newly added to the file 2, and the file 5, and the initial local configuration includes: the file 1, the file 2, the file 3, and the file 4. In this case, the file 1 in the initial local configuration may be modified based on "the part of data deleted from the file 1" in the configuration modification information, that is, "the part of data deleted from the file 1" in the configuration modification information is deleted from the file 1 in the initial local configuration, to obtain the file 1' in the target local configuration. The file 2 in the initial local configuration may be modified based on "the data newly added to the file 2" in the configuration modification information, that is, "the data newly added to the file 2" in the configuration modification information is added to the file 2 in the initial local configuration, to obtain the file 2' in the target local configuration. The initial local configuration may be modified based on "the file 5" in the configuration modification information, that is, "the file 5" in the configuration modification information is added to the initial local configuration, to obtain the file 5 in the target local configuration.

In another possible implementation solution, the data obtained in S802 may be the modified sandbox configuration. In this case, this step may be understood as: synchronously writing the modified sandbox configuration to the local, to obtain the target local configuration.

That is, content of the target local configuration is the same as content of the modified sandbox configuration, and the target local configuration may be obtained by synchronously writing the modified sandbox configuration, or may be obtained by modifying the initial local configuration based on the configuration modification information. This is not limited in this embodiment.

If the target local configuration may be obtained by synchronously writing the modified sandbox configuration, the target local configuration may be implemented in an associated read and write manner. For example, a user control file system (fuse) may be used to synchronously write the modified sandbox configuration to the local, to obtain the target local configuration.

S804: If the sandbox that is started for the first time is closed, in response to a second time of starting the sandbox for running the target object, obtain the target local configuration for locally running the target object.

S805: Mount the target local configuration to the sandbox, to obtain a target sandbox configuration in the sandbox that is started for the second time.

For example, as shown in FIG. 9, the target local configuration is the modified sandbox configuration, including the file 1', the file 2', the file 3, the file 4, and the file 5. In this case, the target local configuration is mounted to the sandbox that is started for the second time, and content of the obtained target sandbox configuration is the same as content of the target local configuration, that is, the target sandbox configuration also includes a file 1', a file 2', a file 3, a file 4, and a file 5.

S806: Create, based on the target sandbox configuration, a second-time sandbox running environment corresponding to the second time of starting the sandbox, and run a sandbox process in the second-time sandbox running environment corresponding to the second time of starting the sandbox, where the sandbox process is used to execute the target object.

That is, in some embodiments, when the sandbox is started for an N^{th} time, a target local configuration for locally running the target object may be obtained, and the target local configuration includes configuration modification information (for example, the target local configuration may be determined based on an initial local configuration and the configuration modification information in the foregoing example, or may be a modified sandbox configuration), and the target local configuration is mounted to the sandbox, to obtain a target sandbox configuration, to create, based on the target sandbox configuration, a sandbox running environment corresponding to the N^{th} time of starting the sandbox.

If the target local configuration may be determined based on the initial local configuration and the configuration modification information in the foregoing example, the target configuration information is obtained by modifying, based on the configuration modification information, the initial local configuration for locally running the target object for an (N-1)^{th} time, and an initial sandbox configuration is obtained by mounting the initial local configuration to the sandbox that is started for the (N-1)^{th} time.

If the target local configuration is the modified sandbox configuration, the target local configuration is obtained by synchronizing the configuration modification information to the initial local configuration by using the user control file system.

For example, as shown in FIG. 9, the second sandbox running environment includes the target sandbox configuration, and the target sandbox configuration is a sandbox configuration obtained after the initial sandbox configuration is modified. The target object is run in the second sandbox running environment, and the modified sandbox configuration is reserved. The user does not need to perform adjustment again, thereby improving user experience.

It should be understood that, the foregoing merely uses an example in which restarting the sandbox is to start the sandbox for the second time to illustrate the sandbox restart method. However, it cannot be understood as that restarting the sandbox needs to be to start the sandbox for the second time. Restarting the sandbox may alternatively be to start the sandbox for a third time or more times. It cannot be understood as that starting the sandbox before the sandbox is restarted is to start the sandbox for the first time. Starting the sandbox before the sandbox is restarted may alternatively be to start the sandbox for the second time or more times.

In addition, in the foregoing example, that the configuration includes a file is merely used as an example to describe configuration mounting, configuration modification, and the like, but cannot be understood as a limitation on the configuration. In some other embodiments, the configuration may alternatively be a font configuration in the foregoing example, or may be a permission configuration, or the like. An implementation principle of the configuration is the same as an implementation principle of the foregoing example. Therefore, details are not described in this embodiment again.

According to another aspect of embodiments of this disclosure, an embodiment of this disclosure further provides a sandbox restart apparatus.

Refer to FIG. 10. FIG. 10 is a diagram of a sandbox restart apparatus according to an embodiment of this disclosure.

As shown in FIG. 10, a sandbox restart apparatus 1000 includes:
a creation unit 1001, configured to: in response to an N^{th} time of starting a sandbox, create a sandbox running environment corresponding to the N^{th} time of starting the sandbox, where
N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when a target object is run in the sandbox for an (N-1)^{th} time and that is for an initial sandbox configuration in a sandbox running environment created for the (N-1)^{th} time; and
a running unit 1002, configured to: run a sandbox process in the sandbox running environment corresponding to the N^{th} time of starting the sandbox, where the sandbox process is used to execute the target object.

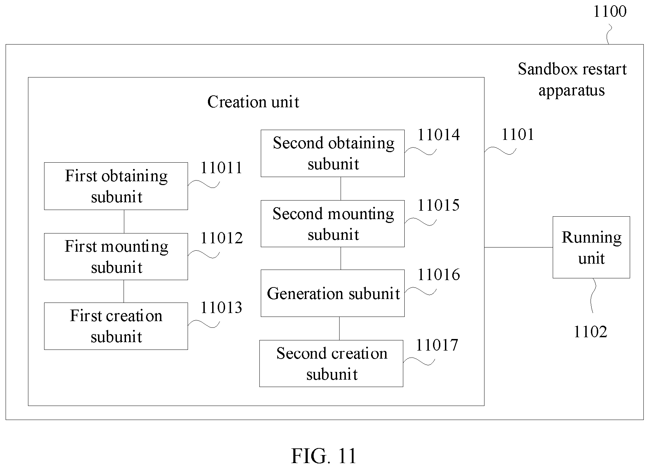

Refer to FIG. 11. FIG. 11 is a diagram of a sandbox restart apparatus according to another embodiment of this disclosure.

As shown in FIG. 11, a sandbox restart apparatus 1100 includes:
a creation unit 1101, configured to: in response to an N^{th} time of starting a sandbox, create a sandbox running environment corresponding to the N^{th} time of starting the sandbox, where
N is a positive integer greater than 1, the sandbox running environment corresponding to the N^{th} time of starting the sandbox includes a target sandbox configuration, the target sandbox configuration includes configuration modification information, and the configuration modification information includes modification content that is obtained when a target object is run in the sandbox for an (N-1)^{th} time and that is for an initial sandbox configuration in a sandbox running environment created for the (N-1)^{th} time.

In some embodiments, with reference to FIG. 11, it can be learned that the creation unit 1101 includes:
a first obtaining subunit 11011, configured to: obtain a target local configuration for locally running the target object, where the target local configuration includes the configuration modification information;
a first mounting subunit 11012, configured to: mount the target local configuration to the sandbox, to obtain the target sandbox configuration; and
a first creation subunit 11013, configured to: create, based on the target sandbox configuration, the sandbox running environment corresponding to the N^{th} time of starting the sandbox.

In some embodiments, the target local configuration is obtained by modifying, based on the configuration modification information, an initial local configuration for locally running the target object for an (N-1)^{th} time, and the initial sandbox configuration is obtained by mounting the initial local configuration to the sandbox that is started for the (N-1)^{th} time.

In some embodiments, the target local configuration is obtained by synchronizing the configuration modification information to the initial local configuration by using a user control file system.

In some embodiments, with reference to FIG. 11, it can be learned that the creation unit 1101 includes:
a second obtaining subunit 11014, configured to obtain a local configuration for locally running the target object;
a second mounting subunit 11015, configured to: mount the local configuration to the sandbox, to obtain an initial sandbox configuration;
a generation subunit 11016, configured to: generate the target sandbox configuration based on the initial sandbox configuration and locally prestored data, where the locally prestored data includes at least the configuration modification information;
in some embodiments, if the locally prestored data is the configuration modification information, the generation subunit 11016 is configured to: modify, based on the configuration modification information, original data that is in the initial sandbox configuration and that corresponds to the configuration modification information, to obtain the target sandbox configuration; and
in some embodiments, if the locally prestored data is data obtained by modifying the initial sandbox configuration based on the configuration modification information, the generation subunit 11016 is configured to: replace the initial sandbox configuration with the locally prestored data, to obtain the target sandbox configuration;
a second creation subunit 11017, configured to: create, based on the target sandbox configuration, the sandbox running environment corresponding to the N^{th} time of starting the sandbox, where
in some embodiments, the locally prestored data is data that includes at least the configuration modification information that is used to modify the initial sandbox configuration and that is locally stored when the target object is run in the sandbox for the (N-1)^{th} time;
the initial sandbox configuration is obtained by mounting the initial local configuration to the sandbox;
in some embodiments, the locally prestored data is the configuration modification information; or the locally prestored data is a configuration obtained after the initial sandbox configuration is modified based on the obtained configuration modification information; and
in some embodiments, the locally prestored data is encrypted data; and
a running unit 1102, configured to: run a sandbox process in the sandbox running environment corresponding to the N^{th} time of starting the sandbox, where the sandbox process is used to execute the target object.

According to another aspect of embodiments of this application, an embodiment of this application further provides a computer storage medium. The computer storage medium stores computer instructions, and when the computer instructions are run by a processor, the sandbox restart method according to any one of the foregoing embodiments is performed.

According to another aspect of embodiments of this application, an embodiment of this application further provides a computer program product. When the computer program product runs on a processor, the sandbox restart method according to any one of the foregoing embodiments is performed.

According to another aspect of embodiments of this disclosure, an embodiment of this disclosure further provides an electronic device, including:
at least one processor; and
a memory that is communicatively connected to the at least one processor.

The memory stores computer instructions that can be executed by the at least one processor, and the computer instructions are executed by the at least one processor, so that the sandbox restart method according to any one of the foregoing embodiments is performed.

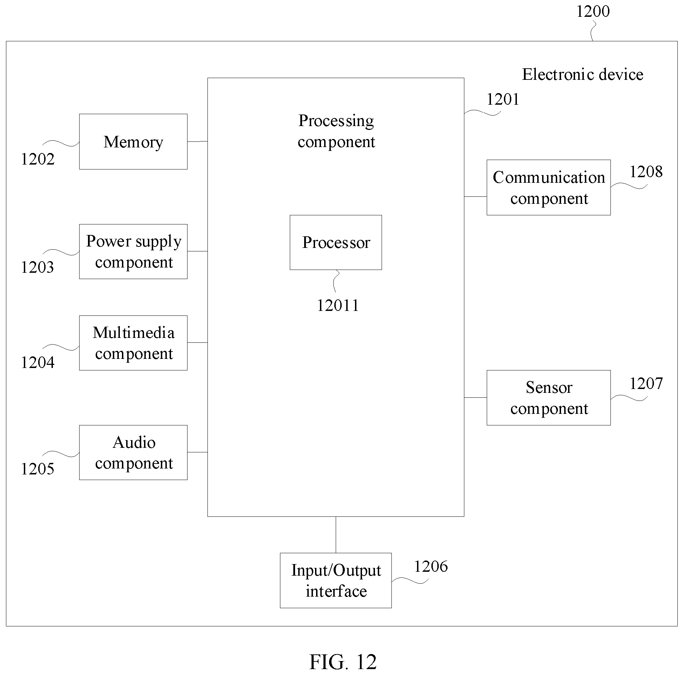

For example, the electronic device may be a terminal device. For descriptions of the terminal device, refer to the descriptions in the foregoing embodiments. For example, the terminal device may be a mobile phone, a tablet device, a personal digital assistant, a computer, or the like. Refer to FIG. 12. FIG. 12 is a diagram of an electronic device according to an embodiment of this disclosure. As shown in FIG. 12, an electronic device 1200 may include one or more of the following components: a processing component 1201, a memory 1202, a power supply component 1203, a multimedia component 1204, an audio component 1205, an input/output (I/O) interface 1206, a sensor component 1207, and a communication component 1208.

The processing component 1201 usually controls an overall operation of the electronic device 1200, for example, an operation related to video playing, display, a phone call, data communication, a camera operation, and a recording operation. The processing component 1201 may include one or more processors 12011 to execute instructions, to complete all or some of the steps of the foregoing method. In addition, the processing component 1201 may include one or more modules, for convenience of interaction between the processing component 1201 and another component. For example, the processing component 1201 may include a multimedia module, to facilitate interaction between the multimedia component 1204 and the processing component 1204.

The memory 1202 is configured to store various types of data to support an operation on the electronic device 1200. An example of the data includes an instruction of any application or method for performing an operation on the electronic device 1200, for example, a video, contact data, phonebook data, a message, or a picture. The memory 1202 may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The power supply component 1203 supplies power to various components of the electronic device 1200. The power supply component 1203 may include a power management system, one or more power supplies, and another component associated with power generation, power management, and power distribution of the electronic device 1200.

The multimedia component 1204 includes a screen that is between the electronic device 1200 and a user and that provides an output interface. In some embodiments, the screen may include a liquid crystal display (LCD) and a touch panel (TP). If the screen includes the touch panel, the screen may be implemented as a touchscreen to receive an input signal from the user.

For example, with reference to the foregoing embodiment, if the target object is an office application, and is specifically a program for viewing an encrypted document, the encrypted document may be output by using the screen, that is, content in the encrypted document may be displayed, for viewing by the user, by the screen.

The touch panel includes one or more touch sensors to sense a touch, sliding, and a gesture on the touch panel. The touch sensor can sense a boundary of a touch or slide operation, and can also detect duration and pressure associated with the touch or slide operation. In some embodiments, the multimedia component 1204 includes a front-facing camera and/or a rear-facing camera. When the electronic device 1200 is in an operating mode, for example, a shooting mode or a video mode, the front-facing camera and/or the rear-facing camera may receive external multimedia data. The front-facing camera and the rear-facing camera each may be a fixed optical lens system or have a focal length and an optical zooming capability.

The audio component 1205 is configured to output and/or input audio data. For example, the audio component 1205 includes a microphone (MIC). When the electronic device 1200 is in an operating mode, for example, a call mode, a recording mode, or a speech recognition mode, the microphone is configured to receive an external audio signal. The received audio signal may be further stored in the memory 1202 or sent through the communication component 1208. In some embodiments, the audio component 1205 further includes a speaker, configured to output audio data, for example, output an audio gain determined by using the method according to the foregoing embodiment and the original audio data.

The I/O interface 1206 provides an interface between the processing component 1201 and a peripheral interface module, and the peripheral interface module may be a keyboard, a click wheel, a button, or the like. The button may include but is not limited to a home button, a volume button, a start button, and a lock button.

The sensor component 1207 includes one or more sensors, configured to provide evaluation of various statuses for the electronic device 1200. For example, the sensor component 1207 may detect an on/off state of the electronic device 1200 and relative positioning of the component, for example, the component is a display and a keypad of the electronic device 1200. The sensor component 1207 may further detect a position change of the electronic device 1200 or a position change of a component of the electronic device 1200, existence or absence of contact between the user and the electronic device 1200, a position or acceleration/deceleration of the electronic device 1200, and a temperature change of the electronic device 1200. The sensor component 1207 may include a proximity sensor, configured to: when there is no physical contact, detect whether a nearby object exists. The sensor component 1207 may further include an optical sensor, such as a CMOS or CCD image sensor, for use in an imaging application. In some embodiments, the sensor component 1207 may further include an acceleration sensor, a gyro sensor, a magnetic sensor, a pressure sensor, or a temperature sensor.

The communication component 1208 is configured to facilitate wired or wireless communication between the electronic device 1200 and another device. The electronic device 1200 may access a wireless network that is based on a communication standard, such as Wi-Fi, 2G, 3G, or a combination thereof. In an example embodiment, the communication component 1208 receives a broadcast signal or broadcast-related information from an external broadcast management system through a broadcast channel. In an example embodiment, the communication component 1208 further includes a near field communication (NFC) module, to facilitate short-range communication. For example, the NFC module may be implemented based on a radio frequency identification (RFID) technology, an infrared data association (IrDA) technology, an ultra-wideband (UWB) technology, a Bluetooth (BT) technology, and another technology.

In an example embodiment, the electronic device 1200 may be implemented by one or more of the following: an application specific integrated circuit (ASIC), a digital signal processor (DSP), a digital signal processing device (DSPD), a programmable logic device (PLD), a field programmable gate array (FPGA), a controller, a microcontroller, a microprocessor, or another electronic component, and is configured to perform the foregoing method.

In an example embodiment, a non-transitory computer-readable storage medium including instructions is further provided, for example, the memory 1202 including instructions. The instructions may be executed by the processor 12011 of the electronic device 1200, to complete the foregoing method. For example, the non-transitory computer-readable storage medium may be a ROM, a random access memory (RAM), a CD-ROM, a magnetic tape, a floppy disk, an optical data storage device, or the like.

It should be understood that steps may be reordered, added, or deleted by using the foregoing various forms of processes. For example, the steps described in this disclosure may be performed in parallel, may be sequentially performed, or may be performed in a different sequence, provided that an expected result of the technical solutions of this disclosure can be implemented. This is not limited herein.

The foregoing specific implementations do not constitute a limitation on the protection scope of this disclosure. A person skilled in the art should understand that various modifications, combinations, sub-combinations, and substitutions may be made based on a design requirement and another factor. Any modification, equivalent replacement, improvement, and the like made without departing from the spirit and principle of this disclosure shall fall within the protection scope of this disclosure.

## Claims

1. A sandbox restart method, wherein the method comprises:
in response to an N^{th} time of starting a sandbox, creating a sandbox running environment corresponding to the N^{th} time of starting the sandbox, wherein
N is a positive integer greater than 1, the sandbox running environment corresponding to the N^{th} time of starting the sandbox comprises a target sandbox configuration, the target sandbox configuration comprises configuration modification information, and the configuration modification information comprises modification content that is obtained when a target object is run in the sandbox for an (N-1)^{th} time and that is for an initial sandbox configuration in a sandbox running environment created for the (N-1)^{th} time; and
running a sandbox process in the sandbox running environment corresponding to the N^{th} time of starting the sandbox, wherein the sandbox process is used to execute the target object.

2. The method according to claim 1, wherein the creating a sandbox running environment corresponding to the N^{th} time of starting the sandbox comprises:
obtaining a target local configuration for locally running the target object, wherein the target local configuration comprises the configuration modification information;
mounting the target local configuration to the sandbox, to obtain the target sandbox configuration; and
creating, based on the target sandbox configuration, the sandbox running environment corresponding to the N^{th} time of starting the sandbox.

3. The method according to claim 2, wherein the target local configuration is obtained by modifying, based on the configuration modification information, an initial local configuration for locally running the target object for an (N-1)^{th} time, and the initial sandbox configuration is obtained by mounting the initial local configuration to the sandbox that is started for the (N-1)^{th} time.

4. The method according to claim 3, wherein the target local configuration is obtained by synchronizing the configuration modification information to the initial local configuration by using a user control file system.

5. The method according to claim 1, wherein the creating a sandbox running environment corresponding to the N^{th} time of starting the sandbox comprises:
obtaining a local configuration for locally running the target object, and mounting the local configuration to the sandbox, to obtain an initial sandbox configuration;
generating the target sandbox configuration based on the initial sandbox configuration and locally prestored data, wherein the locally prestored data comprises at least the configuration modification information; and
creating, based on the target sandbox configuration, the sandbox running environment corresponding to the N^{th} time of starting the sandbox.

6. The method according to claim 5, wherein if the locally prestored data is the configuration modification information, the generating the target sandbox configuration based on the initial sandbox configuration and locally prestored data comprises:
modifying, based on the configuration modification information, original data that is in the initial sandbox configuration and that corresponds to the configuration modification information, to obtain the target sandbox configuration.

7. The method according to claim 5, wherein if the locally prestored data is data obtained by modifying the initial sandbox configuration based on the configuration modification information, the generating the target sandbox configuration based on the initial sandbox configuration and locally prestored data comprises:
replacing the initial sandbox configuration with the locally prestored data, to obtain the target sandbox configuration.

8. The method according to any one of claims 5 to 7, wherein the locally prestored data is data that comprises at least the configuration modification information that is used to modify the initial sandbox configuration and that is locally stored when the target object is run in the sandbox for the (N-1)^{th} time; and
the initial sandbox configuration is obtained by mounting the initial local configuration to the sandbox.

9. The method according to claim 8, wherein the locally prestored data is the configuration modification information; or the locally prestored data is a configuration obtained after the initial sandbox configuration is modified based on the obtained configuration modification information.

10. The method according to claim 8 or 9, wherein the locally prestored data is encrypted data.

11. A sandbox restart apparatus, wherein the apparatus comprises:
a creation unit, configured to: in response to an N^{th} time of starting a sandbox, create a sandbox running environment corresponding to the N^{th} time of starting the sandbox, wherein
N is a positive integer greater than 1, the sandbox running environment corresponding to the N^{th} time of starting the sandbox comprises a target sandbox configuration, the target sandbox configuration comprises configuration modification information, and the configuration modification information comprises modification content that is obtained when a target object is run in the sandbox for an (N-1)^{th} time and that is for an initial sandbox configuration in a sandbox running environment created for the (N-1)^{th} time; and
a running unit, configured to: run a sandbox process in the sandbox running environment corresponding to the N^{th} time of starting the sandbox, wherein the sandbox process is used to execute the target object.

12. A computer storage medium, wherein the computer storage medium stores computer instructions, and when the computer instructions are run by a processor, the method according to any one of claims 1 to 10 is performed.

13. A computer program product, wherein when the computer program product runs on a processor, the method according to any one of claims 1 to 10 is performed.

14. An electronic device, comprising:
at least one processor; and
a memory that is communicatively connected to the at least one processor, wherein
the memory stores computer instructions that can be executed by the at least one processor, and the computer instructions are executed by the at least one processor, so that the method according to any one of claims 1 to 10 is performed.
